# EUROPEAN PATENT SPECIFICATION

(11) **EP 4 273 993 B1**
(45) Date of publication and mention of the grant of the patent: **02.12.2026**
(21) Application number: 22820501.9
(22) Date of filing: 03.06.2022
(51) Int. Cl.: H01M 10/0569, H01M 10/0567, H01M 10/052, H01M 10/42

(54) **NON-AQUEOUS ELECTROLYTE SOLUTION FOR LITHIUM SECONDARY BATTERY AND LITHIUM SECONDARY BATTERY INCLUDING THE SAME**
NICHTWÄSSRIGE ELEKTROLYTLÖSUNG FÜR LITHIUMSEKUNDÄRBATTERIE UND LITHIUMSEKUNDÄRBATTERIE DAMIT
SOLUTION ÉLECTROLYTIQUE NON AQUEUSE POUR BATTERIE SECONDAIRE AU LITHIUM, ET BATTERIE SECONDAIRE AU LITHIUM LA COMPRENANT

(30) Priority: 07.06.2021 KR 20210073589
(43) Date of publication of application: 08.11.2023
(73) Proprietor: LG Energy Solution, Ltd., Seoul 07335 (KR)
(72) Inventor: LEE, Jung Min, Daejeon 34122 (KR); LEE, Kyung Mi, Daejeon 34122 (KR); LEE, Chul Haeng, Daejeon 34122 (KR); OH, Yeon Ji, Daejeon 34122 (KR)
(74) Representative: Hoffmann Eitle
(86) International application number: PCT/KR2022/007946
(87) International publication number: WO 2022/260373

(56) References cited:
- EP-A1- 3 604 276
- EP-A1- 3 605 699
- KR-A- 20170 009 873
- KR-A- 20210 029 533
- KR-A- 20210 055 604
- KR-A- 20210 055 604
- US-A1- 2019 296 398

## Description

### TECHNICAL FIELD

### Cross-reference to Related Applications

This application claims priority from Korean Patent Application Nos. 10-2021-0073589, filed on June 7, 2021, and 10-2022-0068217, filed on June 3, 2022.

### Technical Field

The present invention relates to a non-aqueous electrolyte solution for a lithium secondary battery, which may form a stable film on a surface of an electrode, and a lithium secondary battery including the same.

### BACKGROUND ART

A lithium secondary battery is generally prepared by a method in which, after an electrode assembly is formed by disposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte that becomes a medium for transferring the lithium ions is injected thereinto and the battery case is then sealed.

The non-aqueous electrolyte is generally composed of a lithium salt and a non-aqueous organic solvent capable of dissolving the lithium salt, wherein LiPF₆ has been mainly used as the lithium salt.

With respect to the lithium salt, since it is very vulnerable to heat, it is thermally decomposed to generate a Lewis acid, such as PF₅, when the battery is exposed to high temperatures. The Lewis acid causes decomposition of the organic solvent such as ethylene carbonate, and destructs a solid electrolyte interphase (SEI), which is formed by a reduction reaction on a surface of an active material having an operating voltage outside an electrochemical stabilization window of an electrolyte solution, to increase resistance of the battery and degrade life characteristics.

Recently, studies on lithium secondary batteries using a high-nickel (high-Ni)-based positive electrode active material containing a high concentration of nickel with excellent capacity characteristics and/or a silicon-based negative electrode active material have been conducted as the demand for high-capacity batteries has increased.

In this case, since the high-Ni-based positive electrode active material has low structural stability, it has a limitation in that transition metal in the positive electrode active material is dissolved to rapidly degrade battery performance when it is exposed to high temperature or high voltage.

Also, with respect to a negative electrode using the silicon-based negative electrode active material, it contains more oxygen-rich (O-rich) components in an SEI than a negative electrode using a carbon-based negative electrode active material in order to achieve high energy density. In this case, the SEI containing a large amount of the oxygen-rich component tends to be more easily decomposed when the Lewis acid, such as HF or PF₅, is present in an electrolyte. In addition, since the negative electrode using the silicon-based negative electrode active material has a larger volume expansion than the negative electrode using the carbon-based negative electrode active material, the SEI is easily damaged, and thus, it is disadvantageous in that it is difficult to secure battery performance. As a result, a decomposition reaction of the SEI on surfaces of the positive electrode and the negative electrode proceeds as charge and discharge cycles proceed, and this causes additional decomposition of the electrolyte, leading to the degradation of the battery performance.

In order to address the above-described limitations, a method of adding a nitrile-based additive, such as succinonitrile, capable of suppressing high-temperature degradation to a conventional electrolyte has been proposed, but, since an increase in resistance rather occurs, it is known that it is not suitable for a battery requiring high output characteristics.

Therefore, there is a need to develop a non-aqueous electrolyte solution, which may form a film capable of suppressing a side reaction on the surface of the positive electrode at high temperature and/or high voltage and simultaneously preventing degradation due to the volume expansion of the silicon-based negative electrode, and a lithium secondary battery capable of achieving high-voltage operation and high energy density by including the same. US2019296398A1 discloses electrolyte compositions comprising: a) a first solvent comprising a cyclic carbonate; b) a second solvent comprising a non-fluorinated acyclic carbonate; c) at least one electrolyte component selected from: i) a fluorinated acyclic carboxylic acid ester; ii) a fluorinated acyclic carbonate; iii) a fluorinated acyclic ether; or iv) a mixture thereof; and d) an electrolyte salt; wherein the electrolyte component is present in the electrolyte composition in the range of from about 0.05 weight percent to about 10 weight percent, based on the total weight of the first and second solvents.

### DISCLOSURE OF THE INVENTION

### TECHNICAL PROBLEM

An aspect of the present invention provides a non-aqueous electrolyte solution for a lithium secondary battery which may form a robust film capable of suppressing degradation of a positive electrode and suppressing collapse of the film on a surface of a negative electrode.

Another aspect of the present invention provides a lithium secondary battery in which high-voltage and high-temperature cycle characteristics are improved by including the non-aqueous electrolyte solution for a lithium secondary battery.

### TECHNICAL SOLUTION

The invention is defined in the appended claims.

### ADVANTAGEOUS EFFECTS

Since a non-aqueous electrolyte solution of the present invention forms a robust solid electrolyte interphase (SEI) on a surface of a negative electrode, to which a silicon-based negative electrode active material is introduced, by including two kinds of fluorine-based organic solvents, it may improve stabilization of a negative electrode interface. Also, the non-aqueous electrolyte solution of the present invention forms a stable solid electrolyte interphase (SEI) on a surface of a positive electrode to suppress an electrolyte solution decomposition reaction caused by a side reaction between the positive electrode and the electrolyte solution, it may effectively control dissolution of transition metal. Thus, a lithium secondary battery having improved cycle and capacity characteristics during high-voltage operation and high-temperature storage may be achieved.

### MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

With respect to a lithium ion battery, high-temperature storage characteristics are improved by forming a film having passivation ability on surfaces of a positive electrode and a negative electrode while a non-aqueous electrolyte solution is decomposed during initial charge and discharge. However, since dissolution of transition metal elements occurs in the positive electrode while the film is degraded during high-voltage operation or high-temperature storage, the metallic elements are lost, and thus, discharge capacity may be reduced. Also, since transition metal ions thus dissolved are electrodeposited on the negative electrode reacting in a strong reduction potential range to not only consume electrons, but also destruct a solid electrolyte interphase (SEI) on the surface of the negative electrode to expose the surface of the negative electrode, an additional electrolyte decomposition reaction is caused. As a result, capacity of a cell may be continuously reduced while irreversible capacity is increased.

Thus, the present invention attempts to provide a non-aqueous electrolyte solution for a secondary battery which includes a non-aqueous electrolyte solution additive capable of preventing the dissolution of the transition metal by forming a stable film on the surface of the positive electrode, simultaneously reducing an amount of metallic impurities in the battery by suppressing a side reaction between the electrode and the electrolyte solution, and suppressing decomposition and damage due to volume expansion by forming a robust film on the surface of the negative electrode including a silicon-based negative electrode active material. Also, the present invention attempts to provide a lithium secondary battery in which high-temperature cycle and capacity characteristics are improved by including the above non-aqueous electrolyte solution.

### Non-aqueous Electrolyte Solution for Lithium Secondary Battery

First, a non-aqueous electrolyte solution for a lithium secondary battery according to the present invention will be described.

The non-aqueous electrolyte solution for a lithium secondary battery of the present invention includes
a lithium salt;
a first solvent including a non-fluorine-based solvent;
a second solvent including a fluorine-based carbonate solvent; and
a third solvent including a fluorine-based acetate solvent,
wherein the fluorine-based carbonate solvent and the fluorine-based acetate solvent are included in a weight ratio of 1:0.5 to 1:1, and
a mixed amount of the fluorine-based carbonate solvent and the fluorine-based acetate solvent may be in a range of 3.0 wt% to 30.0 wt% based on a total weight of the non-aqueous electrolyte solution for a lithium secondary battery. The non-fluorine-based solvent includes a cyclic carbonate-based solvent and a linear ester-based solvent; and the linear ester-based solvent is selected from methyl acetate, ethyl acetate, propyl acetate, methyl propionate, ethyl propionate, propyl propionate, and butyl propionate.

### (1) Lithium Salt

Any lithium salt typically used in an electrolyte solution for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, ASF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may include a single material selected from the group consisting of LiCl, LiBr, Lil, LiBF₄, LiClO₄, LiB₁₀Cl₁₀, LiAlCl₄, LiAlO₄, LiPF₆, LiCF₃SO₃, LiCH₃CO₂, LiCF₃CO₂, LiAsF₆, LiSbF₆, LiCH₃SO₃, LiFSI (Lithium bis(fluorosulfonyl) imide, LiN(SO₂F)₂), LiBETI (lithium bis(pentafluoroethanesulfonyl) imide, LiN(SO₂CF₂CF₃)₂, and LiTFSI (lithium bis(trifluoromethanesulfonyl) imide, LiN(SO₂CF₃)₂), or a mixture of two or more thereof. In addition to them, lithium salts commonly used in electrolyte solutions of lithium secondary batteries may be used without limitation.

The lithium salt may be appropriately changed in a normally usable range, but may be included in a concentration of 0.8 M to 3.0 M, for example, 1.0 M to 3.0 M in the electrolyte solution to obtain an optimum effect of forming a film for preventing corrosion of a surface of an electrode.

If the concentration of the lithium salt is less than 0.8 M, since mobility of lithium ions is reduced, capacity characteristics may be degraded. If the concentration of the lithium salt is greater than 3.0 M, since viscosity of the non-aqueous electrolyte solution is excessively increased, electrolyte wetting may be reduced and a film-forming effect may be reduced.

### (2) First Solvent

The non-aqueous electrolyte solution for a lithium secondary battery of the present invention includes a non-fluorine-based solvent as a first solvent.

As the non-fluorine-based solvent, organic solvents commonly used as a non-aqueous electrolyte solution solvent include a cyclic carbonate-based solvent and a linear ester-based solvent, and, specifically, a type of the non-fluorine-based solvent is a cyclic carbonate-based solvent and a linear ester-based solvent so that decomposition due to an oxidation reaction during charge and discharge of the secondary battery may be minimized and desired properties may be exhibited together with an additive.

The non-fluorine-based solvent includes a highly viscous cyclic carbonate-based organic solvent which may well dissociate the lithium salt in the electrolyte due to high permittivity, and, in order to prepare a non-aqueous electrolyte solution having higher ionic conductivity, a linear ester-based organic solvent used by being mixed with the cyclic carbonate-based organic solvent in an appropriate ratio.

As a representative example, the cyclic carbonate-based organic solvent may include at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include at least one selected from ethylene carbonate and propylene carbonate.

Furthermore, the linear ester-based organic solvent, is selected from the group consisting of methyl acetate, ethyl acetate, propyl acetate, methyl propionate, ethyl propionate, propyl propionate, and butyl propionate or a mixture of two or more thereof may be typically used, and the linear ester-based organic solvent may specifically include at least one selected from ethyl propionate and propyl propionate.

The cyclic carbonate-based organic solvent and the linear ester-based organic solvent may be mixed in a volume ratio of 10:90 to 70:30, for example, 10:90 to 50:50 and used as the non-fluorine-based solvent of the present invention.

Also, the non-aqueous electrolyte solution of the present invention may include a cyclic ester-based organic solvent commonly used as a non-aqueous electrolyte solution solvent in addition to the non-fluorine-based solvent in order to prepare an electrolyte solution having high ionic conductivity.

Aa a specific example, the cyclic ester compound may include at least one selected from the group consisting of γ-butyrolactone, γ-valerolactone, γ-caprolactone, σ-valerolactone, and ε-caprolactone, but is not limited thereto.

A remainder excluding other components except for the organic solvent, for example, the lithium salt, a fluorine-based solvent, and an electrolyte solution additive, in the non-aqueous electrolyte solution of the present invention may all be the non-fluorine-based solvent unless otherwise stated.

### (3) Second Solvent

Next, in the present invention, a fluorine-based carbonate solvent is included as a second solvent.

The fluorine-based carbonate solvent may include fluoroethylene carbonate, methyl 2,2,2-trifluoroethyl carbonate, or bis(2,2,2-trifluoroethyl) carbonate, and may preferably include fluoroethylene carbonate.

Since the fluorine-based carbonate solvent may not only form a robust SEI including a LiF component at an interface of a SiO negative electrode, but may also form a relatively dense SEI, a stabilization effect of a surface of the SiO negative electrode may be significantly improved. As a result, an effect of improving initial resistance and long-term resistance increase rate of the secondary battery may be obtained.

The fluorine-based carbonate solvent may be included in an amount of 2.0 wt% to 20.0 wt% based on the total weight of the non-aqueous electrolyte solution for a lithium secondary battery.

In a case in which the fluorine-based carbonate solvent is included in the above range, collapse or degradation even by repeated volume expansion of the negative electrode active material during charge and discharge may be prevented by forming a robust film on the surface of the negative electrode. That is, if the fluorine-based carbonate solvent is included in an amount of 20.0 wt% or less, an increase in initial resistance due to excessive formation of the negative electrode film may be suppressed. Also, it is possible to prevent problems in which the fluorine-based carbonate solvent remaining undecomposed is oxidatively decomposed during high-temperature storage to cause positive electrode self-discharge or to reduce the voltage. Furthermore, if the fluorine-based carbonate solvent is included in an amount of 2.0 wt% or more, since an effect of suppressing the initial resistance and resistance increase rate is improved, a lithium secondary battery with more improved cycle characteristics may be provided.

Specifically, the fluorine-based carbonate solvent may be included in an amount of 5.0 wt% to 20.0 wt%, for example, 7.0 wt% to 18.0 wt%.

### (4) Third Solvent

Also, in the present invention, a fluorine-based acetate solvent is included as a third solvent.

The fluorine-based acetate solvent may include a compound represented by Formula 1 below.

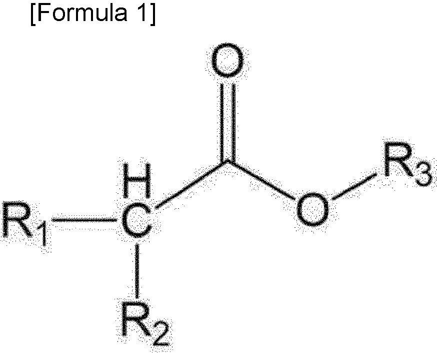

In Formula 1,
R₁ to R₃ are hydrogen, fluorine elements or alkyl groups having 1 to 5 carbon atoms which are unsubstituted or substituted with at least one fluorine element, and
at least one of R₁ to R₃ is a fluorine element or an alkyl group having 1 to 5 carbon atoms which is unsubstituted or substituted with at least one fluorine element.

Specifically, the fluorine-based acetate solvent may include at least one selected from the group consisting of methyl difluoroacetate ethyl difluoroacetate, and 2,2-difluoroethyl acetate.

Since at least one fluorine having high oxidation stability is substituted in the compound represented by Formula 1, a stable film capable of suppressing an oxidative decomposition reaction may be formed on the surface of the positive electrode. Also, a dense and robust SEI based on LiF may be formed together with the fluorine-based carbonate solvent. Particularly, the fluorine-based acetate solvent may be used together with the fluorine-based carbonate solvent to reduce thermal instability of the fluorine-based carbonate. Thus, a lithium secondary battery, which may be stably operated even under a high voltage, may be prepared.

The fluorine-based acetate solvent may be included in an amount of 1.0 wt% to 18.0 wt% based on the total weight of the non-aqueous electrolyte solution for a lithium secondary battery.

In a case in which the fluorine-based acetate solvent is included within the above range, a non-aqueous electrolyte solution for a lithium secondary battery, which has excellent oxidation stability while maintaining wetting above a predetermined level, may be provided. If the fluorine-based acetate solvent is included in an amount of 1.0 wt% or more, side reaction and film destruction due to the volume expansion of the SiO negative electrode may be suppressed by forming a robust LiF-based layer on the negative electrode film, and, if the fluorine-based acetate solvent is included in an amount of 18.0 wt % or less, since a dielectric constant of the electrolyte solution may be improved, the initial resistance may be suppressed and degradation due to decomposition during high-temperature storage may be minimized when remaining in the electrolyte solution.

Specifically, the fluorine-based acetate solvent may be included in an amount of 5.0 wt% to 15.0 wt%, for example, 7.0 wt% to 15.0 wt%.

In the electrolyte solution of the present invention, a mixed amount of the fluorine-based carbonate solvent and the fluorine-based acetate solvent included is in a range of 3.0 wt% to 30.0 wt% based on the total weight of the non-aqueous electrolyte solution for a lithium secondary battery.

In a case in which the mixed amount of the fluorine-based carbonate solvent and the fluorine-based acetate solvent satisfies the above range, the collapse or degradation even by the repeated volume expansion of the negative electrode active material during charge and discharge may be prevented by forming a robust SEI containing a fluorine element on the surface of the negative electrode, and the side reaction between the positive electrode and the electrolyte solution may be prevented by forming a stable passivation film on the surface of the positive electrode.

Specifically, the mixed amount of the fluorine-based carbonate solvent and the fluorine-based acetate solvent included may be in a range of 3.0 wt% to 25.0 wt%, for example, 5.0 wt% to 25.0 wt% based on the total weight of the non-aqueous electrolyte solution for a lithium secondary battery.

Also, a mixing ratio of the fluorine-based carbonate solvent to the fluorine-based acetate solvent may have an important effect on overall performance improvement of the secondary battery. Specifically, the fluorine-based carbonate solvent and the fluorine-based acetate solvent is included in a weight ratio of 1:0.5 to 1:1, specifically, a weight ratio of 1:0.6 to 1:1.

In a case in which the mixing ratio of the fluorine-based acetate solvent to the fluorine-based carbonate solvent satisfies the above range, since a robust LiF-based SEI is formed, high-temperature cycle characteristics of a high-voltage secondary battery using the SiO negative electrode may be significantly improved. That is, in a case in which the mixing ratio of the fluorine-based acetate solvent to the fluorine-based carbonate solvent is a weight ratio of 0.5 or more, since a sufficient amount of the fluorine-based acetate solvent to continuously form a film may be secured, the fluorine-based acetate solvent may form a robust film at the SiO interface together with the fluorine-based carbonate solvent. Also, if the mixing ratio of the fluorine-based acetate solvent to the fluorine-based carbonate solvent is a weight ratio of less than 1, problems, such as a decrease in ionic conductivity and an increase in resistance and occurrence of the side reaction during high-temperature storage, may be suppressed by preventing an increase in the viscosity of the electrolyte solution.

### (5) First Additive

The non-aqueous electrolyte solution for a lithium secondary battery of the present invention may further include a nitrile-based compound having a double bond in its structure and represented by the following Formula 2 as a first additive.

[Formula 2] NC-R-CH=CH-R'-CN

In Formula 2,
R and R' are each independently an unsubstituted or substituted alkylene group having 1 to 5 carbon atoms.

Specifically, R and R' may each independently be an unsubstituted or substituted alkylene group having 1 to 3 carbon atoms. More specifically, the compound represented by Formula 2 may be 1,4-dicyano-2-butene (DCB).

Since the compound represented by Formula 2 may form a strong bond with a positive electrode active material by including at least one polar nitrile group (-CN) having a high dipole moment at both ends, it may form a stable film. In addition, an effect of suppressing dissolution of metal ions may be achieved due to a high binding force with the dissolved metal ions. Furthermore, since the compound represented by Formula 2 contains a double bond structure in a middle of the structure in comparison to a conventional nitrile-based additive such as succinonitrile or adiponitrile, it may form a film in the form of an organic polymer through oxidative decomposition of the double bond and may simultaneously form a very stable ion conductive film while forming a complex structure or ligand by strong bonding with the metal ions on the surface of the positive electrode. As a result, the side reaction between the electrolyte and the positive electrode may be prevented, and gas generation may be suppressed. Furthermore, in addition to the metal ion adsorption effect as described above, since an unshared electron pair of nitrogen (N) of the nitrile group in the compound represented by Formula 2 stabilizes the anion of the lithium salt to suppress generation of HF due to decomposition of the lithium salt, the compound represented by Formula 2 may further improve the high-temperature storage characteristics of the secondary battery.

The compound represented by Formula 2 may be included in an amount of 0.1 wt% to 4.0 wt%, for example, 0.5 wt% to 3.0 wt% based on the total weight of the non-aqueous electrolyte solution for a lithium secondary battery.

If the compound represented by Formula 2 is included in the above range, a stable film is formed on the surface of the positive electrode to have a high effect of suppressing dissolution of metal foreign matter from the positive electrode, and the side reaction between the positive electrode and the electrolyte solution may be prevented by forming a stable film on the surfaces of the negative electrode and the positive electrode. Thus, battery stability during high-temperature storage, cell swelling, and capacity characteristics may be further improved.

That is, if the amount of the compound represented by Formula 2 included is 4.0 wt% or less, since mobility of ions in the battery is improved by improving a cell swelling inhibition effect and simultaneously preventing an excessive increase in resistance of the film and an increase in viscosity of the electrolyte solution due to the surplus compound, the capacity characteristics and cycle characteristics may be improved. Also, if the amount of the compound represented by Formula 2 is 0.1 wt% or more, since an effect of removing the metal foreign matter may be continuously maintained in the battery, the effect of removing metal foreign matter and the effect of suppressing gas generation may be achieved during battery operation time.

### (6) Second Additive

Also, in order to prevent the non-aqueous electrolyte solution from being decomposed to cause collapse of the negative electrode in a high output environment, or further improve low-temperature high-rate discharge characteristics, high-temperature stability, overcharge protection, and a battery swelling suppression effect at high temperatures, the non-aqueous electrolyte solution for a lithium secondary battery of the present invention may further include another additional second additive in addition to the above additive, if necessary.

Examples of the second additive may be at least one selected from the group consisting of a fluorine-unsubstituted cyclic carbonate-based compound, a sultone-based compound, a sulfate-based compound, a phosphate-based or phosphite-based compound, a borate-based compound, a benzene-based compound, an amine-based compound, a silane-based compound, and a lithium salt-based compound.

The fluorine-unsubstituted cyclic carbonate-based compound may include vinylene carbonate (VC) or vinyl ethylene carbonate (VEC).

As a specific example, the sultone-based compound may include at least one selected from the group consisting of 1,3-propane sultone (PS), 1,4-butane sultone, ethane sultone, 1,3-propene sultone (PRS), 1,4-butene sultone, and 1-methyl-1,3-propene sultone.

As a specific example, the sulfate-based compound may include ethylene sulfate (Esa), trimethylene sulfate (TMS), or methyl trimethylene sulfate (MTMS).

The phosphate-based or phosphite-based compound, for example, may be at least one selected from the group consisting of lithium difluoro(bisoxalato)phosphate, lithium difluorophosphate, tris(trimethylsilyl)phosphate, tris(trimethylsilyl)phosphite, tris(2,2,2-trifluoroethyl)phosphate, and tris(trifluoroethyl)phosphite.

The borate-based compound, for example, may include tetraphenylborate and lithium oxalyldifluoroborate (LiODFB) or lithium bis(oxalato)borate (LiB(C₂O₄)₂, LiBOB) capable of forming a film on the surface of the negative electrode.

The benzene-based compound may be fluorobenzene, and the amine-based compound may be triethanolamine or ethylenediamine.

The silane-based compound may be tetravinylsilane.

The lithium salt-based compound is a compound different from the lithium salt included in the non-aqueous electrolyte solution, wherein the lithium salt-based compound may include LiPO₂F₂ or LiBF₄.

The second additive may be used by mixing two or more types of compounds, and may be included in an amount of 0.01 wt% to 50 wt%, particularly 0.01 wt% to 10 wt%, and preferably 0.05 wt% to 5 wt% based on the total weight of the non-aqueous electrolyte solution. If the amount of the second additive is less than 0.01 wt%, an effect of improving cycle characteristics is insignificant, and, if the amount of the second additive is greater than 50 wt%, there is a possibility that the side reaction occurs excessively during charge and discharge of the battery due to the excessive amount of the additive. Particularly, since the additives for forming an SEI may not be sufficiently decomposed at high temperatures when excessive amounts of the additives for forming an SEI are added, an unreacted material may be formed in the electrolyte solution at room temperature, or the additives for forming an SEI may be present in the form of precipitates. Accordingly, a side reaction may occur in which the cycle characteristics of the secondary battery are degraded.

### Lithium Secondary Battery

Next, a lithium secondary battery according to the present invention will be described.

The lithium secondary battery according to the present invention includes a positive electrode, a negative electrode, a separator disposed between the positive electrode and the negative electrode, and a non-aqueous electrolyte solution, and, in this case, the non-aqueous electrolyte solution is the non-aqueous electrolyte solution according to the present invention. Since the non-aqueous electrolyte solution has been described above, a description thereof will be omitted and other components will be described below.

### (1) Positive Electrode

The positive electrode according to the present invention may include a positive electrode active material layer including a positive electrode active material, and, if necessary, the positive electrode active material layer may further include a conductive agent and/or a binder.

The positive electrode active material is a compound capable of reversibly intercalating and deintercalating lithium, wherein the positive electrode active material may include a lithium transition metal oxide including lithium and at least one metal selected from cobalt, manganese, nickel, or aluminum, and may specifically include at least one of a lithium-cobalt-based oxide having high battery capacity characteristics and safety, a lithium-manganese-based oxide (e.g., LiMnO₂, LiMn₂O₄, etc.), and a lithium-nickel-manganese-cobalt-based oxide. Specifically, the positive electrode active material may include a lithium-cobalt-based oxide or a lithium-nickel-manganese-cobalt-based oxide represented by Formula 3 below.

[Formula 3] Liₓ[Ni_{y}Co_{z}Mn_{w}M¹ᵥ]O₂

In Formula 3,
M¹ is a doping element substituted for transition metal sites and may be at least one element selected from the group consisting of tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo).

x represents an atomic ratio of lithium to total transition metals in the lithium nickel cobalt manganese-based oxide, wherein x may be in a range of 0.8 to 1.2, for example, 1 to 1.2.

y represents an atomic ratio of nickel among the transition metals in the lithium nickel cobalt manganese-based oxide, wherein y is in a range of 0.5 or more to less than 1, preferably 0.7 to less than 1, and more preferably 0.75 to 0.98. Since higher capacity may be achieved as an amount of the nickel among the transition metals is increased, that the atomic ratio of the nickel is 0.5 or more is more advantageous for achieving high capacity.

z represents an atomic ratio of cobalt among the transition metals in the lithium nickel cobalt manganese-based oxide, wherein z is in a range of greater than 0 to less than 0.5, preferably 0.01 to 0.3, and more preferably 0.01 to 0.25.

w represents an atomic ratio of manganese among the transition metals in the lithium nickel cobalt manganese-based oxide, wherein w is in a range of greater than 0 to less than 0.5, preferably 0.01 to 0.3, and more preferably 0.01 to 0.25.

v represents an atomic ratio of the doping element M¹ doped into the transition metal sites in the lithium nickel cobalt manganese-based oxide, wherein v may be in a range of 0 to 0.2, for example, 0 to 0.1. That is, in a case in which the doping element M¹ is added, there is an effect of improving structural stability of the lithium nickel cobalt manganese-based oxide, but, since capacity may be reduced when the amount of the doping element is increased, it is desirable that the doping element is included at an atomic ratio of 0.2 or less.

In Formula 3, y+z+w+v=1.

Specific examples of the lithium-nickel-manganese-cobalt-based oxide may be Li(Ni_{0.5}Co_{0.2}Mn_{0.3})O₂, Li(Ni_{0.5}Mn_{0.3}Co_{0.2})O₂, Li(Ni_{0.6}Mn_{0.2}Co_{0.2})O₂, Li(Ni_{0.7}Mn_{0.15}Co_{0.15})O₂, and Li(Ni_{0.8}Mn_{0.1}Co_{0.1})O₂, but the lithium-nickel-manganese-cobalt-based oxide is not limited thereto.

The positive electrode active material may be included in an amount of 80 wt% to 99 wt%, for example, 85 wt% to 99 wt% based on a total weight of a solid content in the positive electrode active material layer. In this case, when the amount of the positive electrode active material is 80 wt% or less, since energy density is reduced, capacity may be reduced.

The binder is a component that assists in the binding between the active material and the conductive agent and in the binding with the current collector, wherein the binder is commonly added in an amount of 1 wt% to 30 wt% based on the total weight of the solid content in the positive electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

Also, the conductive agent is a material providing conductivity without causing adverse chemical changes in the battery, wherein it may be added in an amount of 1 wt% to 20 wt% based on the total weight of the solid content in the positive electrode active material layer.

As a representative example of the conductive agent, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The positive electrode of the present invention as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent and then dried to form a positive electrode active material layer, or a method in which the positive electrode active material layer is cast on a separate support, and a film separated from the support is then laminated on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the positive electrode material mixture may be adjusted to have an appropriate viscosity in consideration of a coating thickness of the positive electrode material mixture, manufacturing yield, and workability, and is not particularly limited.

### (2) Negative Electrode

Next, a negative electrode will be described.

The negative electrode according to the present invention includes a negative electrode active material layer including a negative electrode active material, and the negative electrode active material layer may further include a conductive agent and/or a binder, if necessary.

As the negative electrode active material, various negative electrode active materials used in the art, for example, a carbon-based negative electrode active material, a silicon-based negative electrode active material, or a mixture thereof may be used.

According to an embodiment, the negative electrode active material may include a carbon-based negative electrode active material, and, as the carbon-based negative electrode active material, various carbon-based negative electrode active materials used in the art, for example, a graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

Preferably, the carbon-based negative electrode active material may include at least one of natural graphite and artificial graphite. More preferably, the carbon-based negative electrode active material may include natural graphite and artificial graphite. In a case in which the natural graphite and the artificial graphite are used together, adhesion with the current collector may be increased to suppress exfoliation of the active material.

According to another embodiment, the negative electrode active material may include a silicon-based negative electrode active material, and the silicon-based negative electrode active material, for example, may include at least one selected from the group consisting of metallic silicon (Si), silicon oxide (SiOₓ, where 0<x≤2), silicon carbide (SiC), and a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of Mg, Ca, Sr, barium (Ba), radium (Ra), Sc, Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, lead (Pb), ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, tin (Sn), In, Ti, germanium (Ge), phosphorus (P), arsenic (As), antimony (Sb), bismuth (Bi), sulfur (S), selenium (Se), tellurium (Te), polonium (Po), and a combination thereof.

Since the silicon-based negative electrode active material has higher capacity characteristics than the carbon-based negative electrode active material, better capacity characteristics may be obtained when the silicon-based negative electrode active material is further included. However, with respect to a negative electrode including the silicon-based negative electrode active material, it contains more O-rich components in the SEI than a graphite negative electrode, and the SEI containing the O-rich components tends to be more easily decomposed when a Lewis acid, such as HF or PF₅, is present in the electrolyte. Thus, with respect to the negative electrode including the silicon-based negative electrode active material, there is a need to suppress the formation of the Lewis acid, such as HF and PF₅, or remove (or scavenge) the formed Lewis acid in order to stably maintain the SEI. Since the non-aqueous electrolyte according to the present invention includes the compounds containing the N atom acting as a Lewis base and the F atom improving stability of the SEI on the surface of the negative electrode as an additive, it may effectively suppress the decomposition of the SEI when the negative electrode including the silicon-based negative electrode active material is used.

According to another embodiment, the negative electrode active material may include a mixture of a carbon-based negative electrode active material and a silicon-based negative electrode active material.

Specific examples of the carbon-based negative electrode active material and the silicon-based negative electrode active material are the same as described above.

A mixing ratio of the silicon-based negative electrode active material to the carbon-based negative electrode active material may be in a range of 3 : 97 to 99 : 1, preferably 5 : 95 to 30 : 70, and more preferably 5 : 95 to 15 : 85, as a weight ratio. In a case in which the mixing ratio of the silicon-based negative electrode active material to the carbon-based negative electrode active material satisfies the above range, since a volume expansion of the silicon-based negative electrode active material is suppressed while capacity characteristics are improved, excellent cycle performance may be secured.

The negative electrode active material may be included in an amount of 70 wt% to 99 wt% based on a total weight of the negative electrode active material layer. In a case in which the amount of the negative electrode active material satisfies the above range, excellent capacity characteristics and electrochemical properties may be obtained.

Next, the conductive agent is a component for further improving conductivity of the negative electrode active material, wherein the conductive agent may be added in an amount of 10 wt% or less, for example, 5 wt% or less based on a total weight of a solid content in the negative electrode active material layer. Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The binder is a component that assists in the binding between the conductive agent, the active material, and the current collector, wherein the binder is commonly added in an amount of 0.1 wt% to 10 wt% based on the total weight of the solid content in the negative electrode active material layer. Examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The negative electrode may be prepared by a method of preparing a negative electrode which is known in the art. For example, the negative electrode may be prepared by a method in which a negative electrode collector is coated with a negative electrode slurry, which is prepared by dissolving or dispersing the negative electrode active material as well as selectively the binder and the conductive agent in a solvent, rolled and dried to form a negative electrode active material layer, or may be prepared by casting the negative electrode active material layer on a separate support and then laminating a film separated from the support on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. The negative electrode collector may typically have a thickness of 3 µm to 500 µm, and, similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have an appropriate viscosity in consideration of a coating thickness of the negative electrode material mixture, manufacturing yield, and workability, and is not particularly limited.

### (3) Separator

The lithium secondary battery according to the present invention includes a separator between the positive electrode and the negative electrode.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

The lithium secondary battery according to the present invention as described above may be suitably used in portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in more detail according to examples. However, the invention may be embodied in many different forms and should not be construed as being limited to the embodiments set forth herein. Rather, these example embodiments are provided so that this description will be thorough and complete, and will fully convey the scope of the present invention to those skilled in the art.

### Examples

### Example 1.

### (Non-aqueous Electrolyte Solution Preparation)

After LiPF₆ was dissolved in 75 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 15.0 g of fluoroethylene carbonate, as a fluorine-based carbonate solvent, and 10.0 g of 2,2-difluoroethyl acetate as a fluorine-based acetate solvent (see Table 1 below).

### (Positive Electrode Preparation)

A lithium cobalt-based oxide (LiCoO₂) as positive electrode active material particles, carbon black as a conductive agent, and polyvinylidene fluoride (PVDF), as a binder, were added to N-methyl-2-pyrrolidone (NMP), as a solvent, at a weight ratio of 90:5:5 to prepare a positive electrode active material slurry (solid content 48 wt%). A 100 µm thick positive electrode collector (Al thin film) was coated with the positive electrode active material slurry, dried, and roll-pressed to prepare a positive electrode.

### (Negative Electrode Preparation)

A negative electrode active material (artificial graphite:SiO = 92:8 weight ratio), PVDF as a binder, and carbon black, as a conductive agent, were added to NMP, as a solvent, at a weight ratio of 95:2:3 to prepare a negative electrode active material slurry (solid content: 70 wt%). A 90 µm thick negative electrode collector (Cu thin film) was coated with the negative electrode active material slurry, dried, and roll-pressed to prepare a negative electrode.

### (Secondary Battery Preparation)

After an electrode assembly was prepared by a conventional method of sequentially stacking a polyethylene porous film with the positive electrode and negative electrode prepared by the above-described methods, the electrode assembly was put in a pouch-type secondary battery case, and the above-prepared non-aqueous electrolyte solution for a lithium secondary battery was injected to prepare a lithium secondary battery.

### Example 2.

### (Non-aqueous Electrolyte Solution Preparation)

After LiPF₆ was dissolved in 80 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 10.0 g of fluoroethylene carbonate, as a fluorine-based carbonate solvent, and 10.0 g of 2,2-difluoroethyl acetate as a fluorine-based acetate solvent (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Example 3.

### (Non-aqueous Electrolyte Solution Preparation)

After LiPF₆ was dissolved in 74 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 15.0 g of fluoroethylene carbonate, as a fluorine-based carbonate solvent, and 10.0 g of 2,2-difluoroethyl acetate as a fluorine-based acetate solvent, and adding 1.0 g of 1,4-dicyano-2-butene (hereinafter, referred to as "DCB") as a first additive (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Example 4.

### (Non-aqueous Electrolyte Solution Preparation)

After LiPF₆ was dissolved in 72 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 15.0 g of fluoroethylene carbonate, as a fluorine-based carbonate solvent, and 10.0 g of 2,2-difluoroethyl acetate as a fluorine-based acetate solvent, and adding 3.0 g of 1,4-dicyano-2-butene (DCB) as a first additive (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 1.

### (Non-aqueous Electrolyte Solution Preparation)

After LiPF₆ was dissolved in 85.0 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 15.0 g of fluoroethylene carbonate as a fluorine-based carbonate solvent (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 2.

### (Non-aqueous Electrolyte Solution Preparation)

After LiPF₆ was dissolved in 90.0 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 10.0 g of 2,2-difluoroethyl acetate as a fluorine-based acetate solvent (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 3.

### (Non-aqueous Electrolyte Solution Preparation)

After LiPF₆ was dissolved in 74.0 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 15.0 g of fluoroethylene carbonate and 10.0 g of methyl 2,2,2-trifluoroethyl carbonate, as a fluorine-based carbonate solvent, and adding 1.0 g of 1,4-dicyano-2-butene (DCB) as a first additive (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 4.

### (Non-aqueous Electrolyte Solution Preparation)

After LiPF₆ was dissolved in 78.0 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 10.0 g of fluoroethylene carbonate, as a fluorine-based carbonate solvent, and 12.0 g of 2,2-difluoroethyl acetate as a fluorine-based acetate solvent (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 5.

### (Non-aqueous Electrolyte Solution Preparation)

After LiPF₆ was dissolved in 87.0 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 10.0 g of fluoroethylene carbonate, as a fluorine-based carbonate solvent, and 3.0 g of 2,2-difluoroethyl acetate as a fluorine-based acetate solvent (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 6.

### (Non-aqueous Electrolyte Solution Preparation)

After LiPF₆ was dissolved in 50.0 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 25.0 g of fluoroethylene carbonate, as a fluorine-based carbonate solvent, and 25.0 g of 2,2-difluoroethyl acetate as a fluorine-based acetate solvent (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 7.

### (Non-aqueous Electrolyte Solution Preparation)

After LiPF₆ was dissolved in 99.8 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 0.1 g of fluoroethylene carbonate, as a fluorine-based carbonate solvent, and 0.1 g of 2,2-difluoroethyl acetate as a fluorine-based acetate solvent (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 8.

### (Non-aqueous Electrolyte Solution Preparation)

After LiPF₆ was dissolved in 60.0 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 30.0 g of fluoroethylene carbonate, as a fluorine-based carbonate solvent, and 10.0 g of 2,2-difluoroethyl acetate as a fluorine-based acetate solvent (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 9.

### (Non-aqueous Electrolyte Solution Preparation)

After LiPF₆ was dissolved in 60.0 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 10.0 g of fluoroethylene carbonate, as a fluorine-based carbonate solvent, and 30.0 g of 2,2-difluoroethyl acetate as a fluorine-based acetate solvent (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

### Comparative Example 10.

### (Non-aqueous Electrolyte Solution Preparation)

After LiPF₆ was dissolved in 98.0 g of a non-aqueous organic solvent, in which ethylene carbonate (EC):propylene carbonate (PC):ethyl propionate (EP):propyl propionate (PP) were mixed in a volume ratio of 2:1:2.5:4.5, such that a concentration of the LiPF₆ was 1.2 M, a non-aqueous electrolyte solution for a lithium secondary battery was prepared by mixing 0.5 g of fluoroethylene carbonate, as a fluorine-based carbonate solvent, and 0.5 g of 2,2-difluoroethyl acetate as a fluorine-based acetate solvent, and adding 1.0 g of 1,4-dicyano-2-butene (DCB) as a first additive (see Table 1 below).

### (Secondary Battery Preparation)

A lithium secondary battery was prepared in the same manner as in Example 1 except that the above-prepared non-aqueous electrolyte solution for a lithium secondary battery was injected instead of the non-aqueous electrolyte solution for a lithium secondary battery which was prepared in Example 1.

**[Table 1]**

| Examples | Non-fluorine-based solvent amount (g) | Fluorine-based solvent | | | | | First additive | |
|---|---|---|---|---|---|---|---|---|
| | | Fluorine-based carbonate solvent type | Amount (g) | Fluorine-based acetate solvent type | Amount (g) | Weight ratio of second solvent to third solvent | Type | Amount (g) |
| Example 1 | 75 | FEC | 15 | 2,2-difluoroethyl acetate | 10 | 1:0.6 | - | - |
| Example 2 | 80 | FEC | 10 | 2,2-difluoroethyl acetate | 10 | 1:1 | - | - |
| Example 3 | 74 | FEC | 15 | 2,2-difluoroethyl acetate | 10 | 1:0.6 | DCB | 1 |
| Example 4 | 72 | FEC | 15 | 2,2-difluoroethyl acetate | 10 | 1:0.6 | DCB | 3 |
| Comparative Example 1 | 85 | FEC | 15 | - | - | 1:0 | - | - |
| Comparative Example 2 | 90 | - | - | 2,2-difluoroethyl acetate | 10 | 0:1 | - | - |
| Comparative Example 3 | 74 | FEC | 15 | - | - | 1:0 | DCB | 1 |
| | | methyl 2,2,2-trifluoroethyl carbonate | 10 | | | | | |
| Comparative Example 4 | 78 | FEC | 10 | 2,2-difluoroethyl acetate | 12 | 1:1.2 | - | - |
| Comparative Example 5 | 87 | FEC | 10 | 2,2-difluoroethyl acetate | 3 | 1:0.3 | - | - |
| Comparative Example 6 | 50 | FEC | 25 | 2,2-difluoroethyl acetate | 25 | 1:1 | - | - |
| Comparative Example 7 | 99.8 | FEC | 0.1 | 2,2-difluoroethyl acetate | 0.1 | 1:1 | - | - |
| Comparative Example 8 | 60 | FEC | 30 | 2,2-difluoroethyl acetate | 10 | 1:0.3 | - | - |
| Comparative Example 9 | 60 | FEC | 10 | 2,2-difluoroethyl acetate | 30 | 1:3 | - | - |
| Comparative Example 10 | 98 | FEC | 0.5 | 2,2-difluoroethyl acetate | 0.5 | 1:1 | DCB | 1 |

In Table 1, the abbreviation of each compound has the following meaning.
FEC: fluoroethylene carbonate
DCB: 1,4-dicyano-2-butene

### Experimental Examples

### Experimental Example 1. Room-temperature Cycle Evaluation

After an activation (formation) process was performed at 0.2 C rate on the lithium secondary batteries prepared in Examples 1 to 4 and Comparative Examples 1 to 10, gas in each secondary battery was removed through a degassing process.

3 cycles of an initial charge and discharge process, in which charging of each lithium secondary battery having gas removed therefrom at 0.2 C rate to 4.47 V under a constant current/constant voltage condition at room temperature (25°C), cut-off charging at 0.05 C, and discharging at 0.2 C rate to 3.0 V were set as one cycle, were performed using charge/discharge equipment. In this case, the charging and discharging of the battery was performed by using PNE-0506 charge/discharge equipment (manufacturer: PNE solution).

Subsequently, 200 cycles of a charge and discharge process, in which charging of each lithium secondary battery at 1.0 C rate to 4.47 V at room temperature (25°C), cut-off charging at 0.05 C under a constant current/constant voltage condition, and cut-off discharging at a constant current of 0.5 C rate to 3.0 V were set as one cycle, were performed using the charge/discharge equipment.

Subsequently, discharge capacity after 200 cycles was measured, a capacity retention was calculated as a percentage (%) of discharge capacity value of 200 cycles relative to 2,210 mAh, theoretical capacity of the corresponding cell, and the results thereof are presented in Table 2 below.

**[Table 2]**

| | 200^{th} discharge capacity value (mAh) | Capacity retention (%) |
|---|---|---|
| Example 1 | 2056.4 | 93.05 |
| Example 2 | 2049.7 | 92.75 |
| Example 3 | 2132.0 | 96.47 |
| Example 4 | 2052.7 | 92.88 |
| Comparative Example 1 | 1993.6 | 90.21 |
| Comparative Example 2 | 1814.1 | 82.09 |
| Comparative Example 3 | 1929.7 | 87.32 |
| Comparative Example 4 | 2022.5 | 91.52 |
| Comparative Example 5 | 2014.6 | 91.16 |
| Comparative Example 6 | 1865.9 | 84.43 |
| Comparative Example 7 | 1765.9 | 79.90 |
| Comparative Example 8 | 1894.6 | 85.73 |
| Comparative Example 9 | 1952.4 | 88.34 |
| Comparative Example 10 | 1906.5 | 86.27 |

Referring to Table 2, it may be understood that discharge capacity values of the secondary batteries of Examples 1 to 4 were about 2,049.7 mAh or more, and capacity retentions were about 92.75% or more.

In contrast, it may be confirmed that discharge capacity values and capacity retentions of the secondary batteries of Comparative Examples 1 to 10 were degraded in comparison to those of the secondary batteries of Examples 1 to 4.

Particularly, with respect to the secondary battery of Comparative Example 8 including an excessive amount of the fluorine-based carbonate solvent, the secondary battery of Comparative Example 9 including an excess amount of the fluorine-based acetate solvent, and the secondary batteries of Comparative Examples 7 and 10 including a small amount of the fluorine-based carbonate solvent and the fluorine-based acetate solvent, it may be confirmed that they were degraded in comparison to the secondary batteries of Examples 1 to 4 in which an appropriate amount of the solvents was used.

In Table 2, with respect to the secondary battery of Comparative Example 1 including only FEC, it may be understood that it exhibited a relatively higher capacity retention than the secondary batteries of Comparative Examples 6, 8, and 9 including an excessive amount of the fluorine-based carbonate solvent and/or the fluorine-based acetate solvent. That is, it means that, in a case in which FEC was included in an appropriate amount even if the FEC was used alone, lifetime retention may be improved due to a SiO negative electrode interface strengthening effect. In contrast, with respect to the fluorine-based acetate solvent, it may be understood that performance was low when it was used alone as in Comparative Example 2, because a negative electrode interface stabilization effect was not large by itself.

Referring to the results of Table 2, it may be understood that, in a case in which the two types of fluorine-based solvents were included in an optimal amount ratio in the non-aqueous electrolyte solution, the highest performance may be exhibited due to a synergistic effect.

### Experimental Example 2. High-temperature Cycle Characteristics Evaluation

After an activation (formation) process was performed at 0.2 C rate on the lithium secondary batteries prepared in Examples 1 to 4 and Comparative Examples 1 to 10, gas in each secondary battery was removed through a degassing process.

3 cycles of an initial charge and discharge process, in which charging of each lithium secondary battery having gas removed therefrom at 0.2 C rate to 4.47 V under a constant current/constant voltage condition at room temperature (25°C), cut-off charging at 0.05 C, and discharging at 0.2 C rate to 3.0 V were set as one cycle, were performed using charge/discharge equipment. The charging and discharging of the battery was performed by using PNE-0506 charge/discharge equipment (manufacturer: PNE solution).

Subsequently, 200 cycles of a charge and discharge process, in which charging of each lithium secondary battery at 1.0 C rate to 4.47 V at a high temperature (45°C), cut-off charging at 0.05 C under a constant current/constant voltage condition, and cut-off discharging at a constant current of 0.5 C rate to 3.0 V were set as one cycle, were performed using the charge/discharge equipment.

Subsequently, discharge capacity after 200 cycles was measured, a capacity retention was calculated as a percentage (%) of discharge capacity value of 200 cycles relative to 2,210 mAh, theoretical capacity of the corresponding cell, and the results thereof are presented in Table 3 below.

**[Table 3]**

| | 200^{th} discharge capacity value (mAh) | Capacity retention (%) |
|---|---|---|
| Example 1 | 2032.8 | 91.98 |
| Example 2 | 2016.7 | 91.25 |
| Example 3 | 2110.1 | 95.48 |
| Example 4 | 2056.5 | 93.05 |
| Comparative Example 1 | 1979.6 | 89.57 |
| Comparative Example 2 | 1735.7 | 79.365 |
| Comparative Example 3 | 1882.7 | 85.19 |
| Comparative Example 4 | 1998.3 | 90.42 |
| Comparative Example 5 | 1974.4 | 89.34 |
| Comparative Example 6 | 1776.3 | 80.38 |
| Comparative Example 7 | 1704.1 | 77.11 |
| Comparative Example 8 | 1826.6 | 82.65 |
| Comparative Example 9 | 1943.8 | 87.95 |
| Comparative Example 10 | 1896.5 | 85.81 |

Referring to Table 3, it may be understood that discharge capacity values of the secondary batteries of Examples 1 to 4 were about 2,016.7 mAh or more, and capacity retentions were about 91.25% or more.

**In** contrast, it may be confirmed that discharge capacity values and capacity retentions of the secondary batteries of Comparative Examples 1 to 10 were degraded in comparison to those of the secondary batteries of Examples 1 to 4.

Particularly, with respect to the secondary battery of Comparative Example 8 including an excessive amount of the fluorine-based carbonate solvent, the secondary battery of Comparative Example 9 including an excess amount of the fluorine-based acetate solvent, and the secondary batteries of Comparative Examples 7 and 10 including a small amount of the fluorine-based carbonate solvent and the fluorine-based acetate solvent, it may be confirmed that they were degraded in comparison to the secondary batteries of Examples 1 to 4 in which an appropriate amount of the solvents was used.

Referring to the results of Table 3, it may be understood that, in a case in which the two types of fluorine-based solvents were included in an optimal amount ratio in the non-aqueous electrolyte solution, the highest performance may be exhibited due to a synergistic effect.

## Claims

1. A non-aqueous electrolyte solution for a lithium secondary battery, the non-aqueous electrolyte solution comprising:
a lithium salt;
a first solvent including a non-fluorine-based solvent;
a second solvent including a fluorine-based carbonate solvent; and
a third solvent including a fluorine-based acetate solvent,
wherein the non-fluorine-based solvent includes a cyclic carbonate-based solvent and a linear ester-based solvent;
the linear ester-based solvent is selected from methyl acetate, ethyl acetate, propyl acetate, methyl propionate, ethyl propionate, propyl propionate, and butyl propionate;
the fluorine-based carbonate solvent and the fluorine-based acetate solvent are included in a weight ratio of 1:0.5 to 1:1; and
the mixed amount of the fluorine-based carbonate solvent and the fluorine-based acetate solvent is in the range of 3.0 wt% to 30.0 wt% based on the total weight of the non-aqueous electrolyte solution for a lithium secondary battery.

2. The non-aqueous electrolyte solution for a lithium secondary battery of claim 1, wherein the fluorine-based carbonate solvent comprises fluoroethylene carbonate, methyl 2,2,2-trifluoroethyl carbonate, or bis(2,2,2-trifluoroethyl) carbonate.

3. The non-aqueous electrolyte solution for a lithium secondary battery of claim 1, wherein the fluorine-based carbonate solvent is included in an amount of 2.0 wt% to 20 wt% based on the total weight of the non-aqueous electrolyte solution for a lithium secondary battery.

4. The non-aqueous electrolyte solution for a lithium secondary battery of claim 1, wherein the fluorine-based acetate solvent comprises a compound represented by Formula 1: 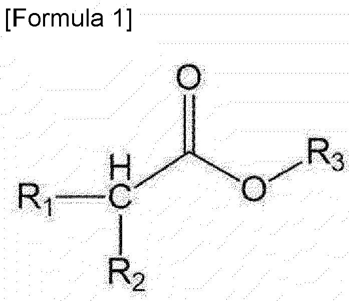 wherein, in Formula 1,
R₁ to R₃ are hydrogen, fluorine elements or alkyl groups having 1 to 5 carbon atoms which are unsubstituted or substituted with at least one fluorine element, and
at least one of R₁ to R₃ is a fluorine element or an alkyl group having 1 to 5 carbon atoms which is substituted with at least one fluorine element.

5. The non-aqueous electrolyte solution for a lithium secondary battery of claim 4, wherein the fluorine-based acetate solvent is at least of methyl difluoroacetate, ethyl difluoroacetate, and 2,2-difluoroethyl acetate.

6. The non-aqueous electrolyte solution for a lithium secondary battery of claim 5, wherein the fluorine-based acetate solvent is 2,2-difluoroethyl acetate.

7. The non-aqueous electrolyte solution for a lithium secondary battery of claim 1, wherein the fluorine-based acetate solvent is included in an amount of 1.0 wt% to 18.0 wt% based on the total weight of the non-aqueous electrolyte solution for a lithium secondary battery.

8. The non-aqueous electrolyte solution for a lithium secondary battery of claim 1, wherein a mixing ratio of the fluorine-based carbonate solvent to the fluorine-based acetate solvent is in a range of 1:0.6 to 1:1 as a weight ratio.

9. The non-aqueous electrolyte solution for a lithium secondary battery of claim 1, further comprising a first additive including a compound represented by Formula 2:
[Formula 2] NC-R-CH=CH-R'-CN
wherein, in Formula 2, R and R' are each independently an unsubstituted or substituted alkylene group having 1 to 5 carbon atoms.

10. The non-aqueous electrolyte solution for a lithium secondary battery of claim 9, wherein R and R' are each independently an unsubstituted or substituted alkylene group having 1 to 3 carbon atoms.

11. The non-aqueous electrolyte solution for a lithium secondary battery of claim 9, wherein the compound represented by Formula 2 is 1,4-dicyano-2-butene (DCB).

12. The non-aqueous electrolyte solution for a lithium secondary battery of claim 9, wherein the compound represented by Formula 2 is included in an amount of 0.1 wt% to 4.0 wt% based on the total weight of the non-aqueous electrolyte solution for a lithium secondary battery.

13. A lithium secondary battery comprising:
a positive electrode including a positive electrode active material;
a negative electrode including a negative electrode active material;
a separator disposed between the negative electrode and the positive electrode; and
the non-aqueous electrolyte solution for a lithium secondary battery of claim 1.

## Patentansprüche

1. Nichtwässrige Elektrolytlösung für eine Lithiumsekundärbatterie, wobei die nichtwässrige Elektrolytlösung umfasst:
ein Lithiumsalz,
ein erstes Lösungsmittel, das ein fluorfreies Lösungsmittel einschließt,
ein zweites Lösungsmittel, das ein fluorbasiertes Carbonatlösungsmittel einschließt, und
ein drittes Lösungsmittel, das ein fluorbasiertes Acetatlösungsmittel einschließt,
wobei das fluorfreie Lösungsmittel ein Lösungsmittel auf Basis eines cyclischen Carbonats und ein Lösungsmittel auf Basis eines linearen Esters einschließt,
das Lösungsmittel auf Basis eines linearen Esters aus Methylacetat, Ethylacetat, Propylacetat, Methylpropionat, Ethylpropionat, Propylpropionat und Butylpropionat ausgewählt ist,
das fluorbasierte Carbonatlösungsmittel und das fluorbasierte Acetatlösungsmittel in einem Gewichtsverhältnis von 1:0,5 bis 1:1 enthalten sind und
die Mischmenge des fluorbasierten Carbonatlösungsmittels und des fluorbasierten Acetatlösungsmittels im Bereich von 3,0 Gew.-% bis 30,0 Gew.-%, bezogen auf das Gesamtgewicht der nichtwässrigen Elektrolytlösung für eine Lithiumsekundärbatterie, liegt.

2. Nichtwässrige Elektrolytlösung für eine Lithiumsekundärbatterie nach Anspruch 1, wobei das fluorbasierte Carbonatlösungsmittel Fluorethylencarbonat, Methyl-2,2,2-trifluorethylcarbonat oder Bis(2,2,2-trifluorethyl)carbonat umfasst.

3. Nichtwässrige Elektrolytlösung für eine Lithiumsekundärbatterie nach Anspruch 1, wobei das fluorbasierte Carbonatlösungsmittel in einer Menge von 2,0 Gew.-% bis 20 Gew.-%, bezogen auf das Gesamtgewicht der nichtwässrigen Elektrolytlösung für eine Lithiumsekundärbatterie, enthalten ist.

4. Nichtwässrige Elektrolytlösung für eine Lithiumsekundärbatterie nach Anspruch 1, wobei das fluorbasierte Acetatlösungsmittel eine durch Formel 1 dargestellte Verbindung umfasst: 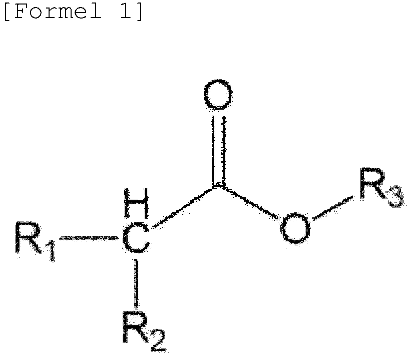 wobei in Formel 1
R₁ bis R₃ Wasserstoff, Fluorelemente oder Aklylgruppen mit 1 bis 5 Kohlenstoffatomen sind, die unsubstituiert oder mit mindestens einem Fluorelement substituiert sind, und
mindestens eines von R₁ bis R₃ ein Fluorelement oder eine Alkylgruppe mit 1 bis 5 Kohlenstoffatomen ist, die mit mindestens einem Fluorelement substituiert ist.

5. Nichtwässrige Elektrolytlösung für eine Lithiumsekundärbatterie nach Anspruch 4, wobei das fluorbasierte Acetatlösungsmittel mindestens eines von Methyldifluoracetat, Ethyldifluoracetat und 2,2-Difluorethylacetat ist.

6. Nichtwässrige Elektrolytlösung für eine Lithiumsekundärbatterie nach Anspruch 5, wobei das fluorbasierte Acetatlösungsmittel 2,2-Difluorethylacetat ist.

7. Nichtwässrige Elektrolytlösung für eine Lithiumsekundärbatterie nach Anspruch 1, wobei das fluorbasierte Acetatlösungsmittel in einer Menge von 1,0 Gew.-% bis 18.0 Gew.-%, bezogen auf das Gesamtgewicht der nichtwässrigen Elektrolytlösung für eine Lithiumsekundärbatterie, enthalten ist.

8. Nichtwässrige Elektrolytlösung für eine Lithiumsekundärbatterie nach Anspruch 1, wobei das Mischverhältnis des fluorbasierten Carbonatlösungsmittels zum fluorbasierten Acetatlösungsmittel in einem Bereich von 1:0,6 bis 1:1 als Gewichtsverhältnis liegt.

9. Nichtwässrige Elektrolytlösung für eine Lithiumsekundärbatterie nach Anspruch 1, ferner umfassend ein erstes Additiv, das eine durch Formel 2 dargestellte Verbindung einschließt:
[Formel 2] NC-R-CH=CH-R'-CN
wobei in Formel 2 R und R' jeweils unabhängig eine unsubstituierte oder substituierte Alkylengruppe mit 1 bis 5 Kohlenstoffatomen sind.

10. Nichtwässrige Elektrolytlösung für eine Lithiumsekundärbatterie nach Anspruch 9, wobei R und R' jeweils unabhängig eine unsubstituierte oder substituierte Alkylengruppe mit 1 bis 3 Kohlenstoffatomen sind.

11. Nichtwässrige Elektrolytlösung für eine Lithiumsekundärbatterie nach Anspruch 9, wobei die durch Formel 2 dargestellte Verbindung 1,4-Dicyano-2-buten (DCB) ist.

12. Nichtwässrige Elektrolytlösung für eine Lithiumsekundärbatterie nach Anspruch 9, wobei die durch Formel 2 dargestellte Verbindung in einer Menge von 0,1 Gew.-% bis 4,0 Gew.-%, bezogen auf das Gesamtgewicht der nichtwässrigen Elektrolytlösung für eine Lithiumsekundärbatterie, enthalten ist.

13. Lithiumsekundärbatterie, umfassend:
eine positive Elektrode, die ein Aktivmaterial für eine positive Elektrode einschließt,
eine negative Elektrode, die ein Aktivmaterial für eine negative Elektrode einschließt,
einen Separator, der zwischen der negativen Elektrode und der positiven Elektrode angeordnet ist, und
die nichtwässrige Elektrolytlösung für eine Lithiumsekundärbatterie nach Anspruch 1.

## Revendications

1. Solution électrolytique non-aqueuse pour une batterie secondaire au lithium, la solution électrolytique non-aqueuse comprenant :
un sel de lithium ;
un premier solvant incluant un solvant non fluoré ;
un deuxième solvant incluant un solvant à base de carbonate fluoré ; et
un troisième solvant incluant un solvant à base d'acétate fluoré,
dans laquelle le solvant non fluoré inclut un solvant à base de carbonate cyclique et un solvant à base d'ester linéaire ;
le solvant à base d'ester linéaire est sélectionné parmi l'acétate de méthyle, l'acétate d'éthyle, l'acétate de propyle, le propionate de méthyle, le propionate d'éthyle, le propionate de propyle et le propionate de butyle ;
le solvant à base de carbonate fluoré et le solvant à base d'acétate fluoré sont inclus dans un rapport en poids de 1:0,5 à 1:1 ; et
la quantité mélangée du solvant à base de carbonate fluoré et du solvant à base d'acétate fluoré est dans la plage de 3,0 % en poids à 30,0 % en poids sur la base du poids total de la solution électrolytique non aqueuse pour une batterie secondaire au lithium.

2. Solution électrolytique non-aqueuse pour une batterie secondaire au lithium selon la revendication 1, dans laquelle le solvant à base de carbonate fluoré comprend du carbonate de fluoroéthylène, du carbonate de 2,2,2-trifluoroéthyle méthyle ou du carbonate de bis(2,2,2-trifluoroéthyle).

3. Solution électrolytique non-aqueuse pour une batterie secondaire au lithium selon la revendication 1, dans laquelle le solvant à base de carbonate fluoré est inclus en une quantité de 2,0 % en poids à 20 % en poids sur la base du poids total de la solution électrolytique non aqueuse pour une batterie secondaire au lithium.

4. Solution électrolytique non-aqueuse pour une batterie secondaire au lithium selon la revendication 1, dans laquelle le solvant à base d'acétate fluoré comprend un composé représenté par la formule 1 : 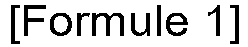 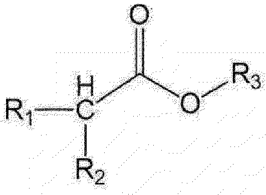 dans laquelle, dans la formule 1,
R₁ à R₃ sont l'hydrogène, des éléments fluor ou des groupes alkyle présentant 1 à 5 atomes de carbone qui sont non substitués ou substitués par au moins un élément fluor, et au moins un de R₁ à R₃ est un élément fluor ou un groupe alkyle présentant 1 à 5 atomes de carbone qui est substitué par au moins un élément fluor.

5. Solution électrolytique non aqueuse pour une batterie secondaire au lithium selon la revendication 4, dans laquelle le solvant à base d'acétate fluoré est au moins un composé parmi le difluoroacétate de méthyle, le difluoroacétate d'éthyle et l'acétate de 2,2-difluoroéthyle.

6. Solution électrolytique non aqueuse pour une batterie secondaire au lithium selon la revendication 5, dans laquelle le solvant à base d'acétate fluoré est l'acétate de 2,2-difluoroéthyle.

7. Solution électrolytique non-aqueuse pour une batterie secondaire au lithium selon la revendication 1, dans laquelle le solvant à base d'acétate fluoré est inclus en une quantité de 1,0 % en poids à 18,0 % en poids sur la base du poids total de la solution électrolytique non aqueuse pour une batterie secondaire au lithium.

8. Solution électrolytique non-aqueuse pour une batterie secondaire au lithium selon la revendication 1, dans laquelle un rapport de mélange du solvant à base de carbonate fluoré sur le solvant à base d'acétate fluoré est compris dans une plage de 1:0,6 à 1:1 en tant que rapport en poids.

9. Solution électrolytique non-aqueuse pour une batterie secondaire au lithium selon la revendication 1, comprenant en outre un premier additif incluant un composé représenté par la formule 2 :
[Formule 2] NC-R-CH=CH-R'-CN
dans laquelle, dans la formule 2, R et R' sont chacun indépendamment un groupe alkylène non substitué ou substitué présentant 1 à 5 atomes de carbone.

10. Solution électrolytique non-aqueuse pour une batterie secondaire au lithium selon la revendication 9, dans laquelle R et R' sont chacun indépendamment un groupe alkylène non substitué ou substitué présentant 1 à 3 atomes de carbone.

11. Solution électrolytique non-aqueuse pour une batterie secondaire au lithium selon la revendication 9, dans laquelle le composé représenté par la formule 2 est le 1,4-dicyano-2-butène (DCB).

12. Solution électrolytique non-aqueuse pour une batterie secondaire au lithium selon la revendication 9, dans laquelle le composé représenté par la formule 2 est inclus en une quantité de 0,1 % en poids à 4,0 % en poids sur la base du poids total de la solution électrolytique non aqueuse pour une batterie secondaire au lithium.

13. Batterie secondaire au lithium comprenant :
une électrode positive incluant un matériau actif d'électrode positive ;
une électrode négative incluant un matériau actif d'électrode négative ;
un séparateur disposé entre l'électrode négative et l'électrode positive ; et
la solution électrolytique non-aqueuse pour une batterie secondaire au lithium selon la revendication 1.
